Europäisches Patentamt

European Patent Office

Office européen des brevets

(19)

(11) Publication number: **0 145 115**
**B1**

(12) EUROPEAN PATENT SPECIFICATION

(45) Date of publication of patent specification: **19.04.89**

(51) Int. Cl.⁴: **G 01 B 11/16**

(21) Application number: **84305300.0**

(22) Date of filing: **03.08.84**

(54) **Thermal deformation measuring system of ceramics and the like.**

(30) Priority: **15.08.83 JP 147966/83**
**22.06.84 JP 127526/84**

(43) Date of publication of application:
**19.06.85 Bulletin 85/25**

(45) Publication of the grant of the patent:
**19.04.89 Bulletin 89/16**

(84) Designated Contracting States:
**AT DE FR GB**

(56) References cited:
**DD-B- 59 943**
**FR-A-2 425 052**
**FR-A-2 483 070**
**FR-A-2 497 341**

**"Refractory Engineering Handbook" 15th April
1973, The Ceramic Society of Japan, published
by Kabushiki Kaisha Gihado, Tokyo**

(73) Proprietor: **SHINAGAWA REFRACTORIES CO.,
LTD.**
**2-1, Ohtemachi 2-chome Chiyoda-ku
Tokyo 100 (JP)**

(73) Proprietor: **Matsushita Electric Industrial Co.,
Ltd.**
**1006, Oaza Kadoma
Kadoma-shi Osaka-fu, 571 (JP)**

(72) Inventor: **Kyoden, Hiroshi**
**554-23, Asakawa
Okayama-shi Okayama-ken (JP)**
Inventor: **Endo, Yasuhiro**
**1935-1, Inbe
Bizen-shi Okayama-ken (JP)**
Inventor: **Fujiwara, Teiichi**
**1472, Ohuchi Seto-cho
Akaiwa-gun Okayama-ken (JP)**
Inventor: **Mimura, Toshisada**
**514-3, Takaya
Okayama-shi Okayama-ken (JP)**
Inventor: **Nishikawa, Kihachiro**
**18-16, Nagatsuda 3-chome Midori-ku
Yokohama-shi Kanagawa-ken (JP)**
Inventor: **Nishizawa, Shoichi**
**1, Sugita-cho 7-chome Isogo-ku
Yokohama-shi Kanagawa-ken (JP)**

Courier Press, Leamington Spa, England.

EP 0 145 115 B1

**EP  0 145 115  B1**

(74) Representative: **Marsh, Roy David et al**
**Brewer & Son 5-9, Quality Court Chancery Lane**
**London WC2A 1HT (GB)**

## Description

This invention relates to a thermal deformation measuring system of ceramics and the like, in which there is measured in non-push rod type, precisely and automatically the deformation [such as thermal linear expansion coefficient (hereinafter referred to as thermal expansion coefficient) or creep deformation rate] mainly of ceramics and the like under high temperature.

The thermal expansion coefficient of fine ceramics, refractories, pottery and porcelain, glass or ceramics of composite materials thereof with metal, or various kinds of metals, and particularly the thermal expansion coefficient of refractories is one of the most important properties, which guides the determination of the expansion margin of the lining refractories of furnaces used in the hot state.

French patent specification 2483070 discloses a width gauge for measuring the width of rolled material. This gauge includes a camera containing two linear arrays of photodetectors, and the camera is arranged to produce on each array an image of a respective one of the edges of the material.

Both arrays are scanned from the less illuminated end of the array to the more illustrated end to avoid the problem of detecting the edges caused by dark spots produced by slag or uneven cooling.

The light source may be monochromatic, such as for example a sodium-vapour lamp.

French patent specification 2497341 discloses an apparatus for measuring material deformation including an at least partially transparent chamber, and a porous support to support deformable material in the chamber. A light beam is passed through the chamber so as to be intercepted by the material, and the light beam leaving the chamber is focused into a photo-electric receiver which converts received light into an electrical signal.

When the material is heated it deforms thereby changing the intensity of light received by the photo-electric receiver which produces a corresponding change in the electric signal.

With the apparatus of the above-mentioned French patent specifications, difficulties arise in distinguishing between the light zones and the dark zones on the photodiodes or photo-electric receiver when the material emits infrared light. Although the apparatus of French patent specifications 2483070 would cut-out infrared light when modified for use with a sodium-vapour lamp, this apparatus could not then be used with light from the remainder of the visible spectrum.

In addition, the apparatus of French patent specification 2483070 and 2497341 does not include data processors for processing the information received by the cameras or the photoelectric receiver.

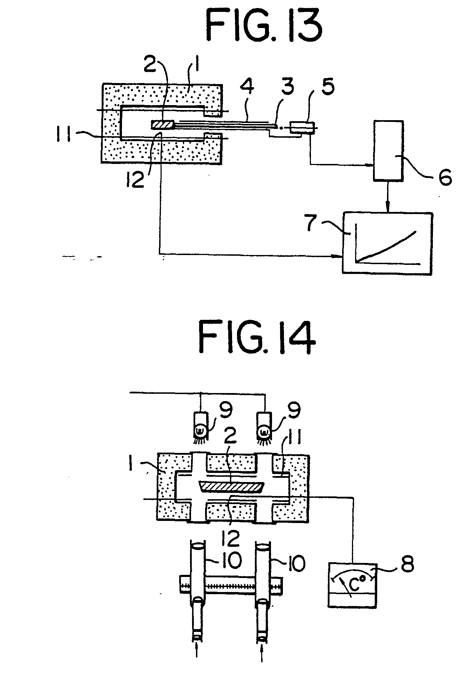

Conventionally, as standardized in JIS R 2617 and JIS R 2207, as shown in Fig. 13 of the accompanying drawings, the thermal expansion coefficient is measured and calculated under push rod type or non-push rod type systems, of which the push rod type is such that a specimen 2 placed on a specimen holder 4 provided within an electric furnace 1 is contacted with a deformation detector or tube 3 thereby to detect the expansion or contraction of the specimen, and the deformation is read either by dial gauge or by deformation measuring means 6 of differential transformer type, or the deformation is once recorded in a recorder 7 and after measurement it is read from the curve thereby to calculate the expansion coefficient, as shown in Fig. 13 wherein reference 5 designates a differential transformer, reference 11 a heater and reference 12 a thermocouple.

According to this method, however, the specimen is contacted with a detecting bar when a measuring pressure is applied, and therefore in the case of a specimen which is softened at high temperature the specimen itself is deformed by the compressive force caused by the measuring pressure, and it was difficult to measure the true expansion coefficient. Further, in such case it was often required to compensate the difference of expansion rate between the specimen holder and the deformation detector, thereby causing errors.

Accordingly, these days there is adopted a method of measuring specimens with non-push rod type. As one of the methods of non-push rod type measuring there is mentioned such one as in Fig. 14 of the accompanying drawings that the deformation of both the ends of a specimen 2 placed in the electric heater 1 is directly read out through a graduated telescope 10. According to this method, light and dark distinction of the specimen and atmosphere is hardly produced when the interior of the furnace is at high temperature, so that read is difficult and much relies on experience thereby causing measuring errors. Further, in the data thus obtained it was necessary to calculate the change ratio to the original length of the specimen and to show the relationship between the temperature and the expansion coefficient in a drawing. In Fig. 14 numeral 8 designates a thermometer, 9 an illuminator, 11 a heater, and 12 a thermocouple.

Furthermore, as another non-push rod type method of measuring a specimen there is mentioned such one that the deformation of the specimen at each temperature is photographed with a camera with graduated telescopic lens so as to read the deformation of the specimen from the photographs, but this method requires a lot of time for data processing so as to be questionable from the efficiency point of view.

Moreover, it is necessary to know in designing a structure the compressive creep deformation rate of ceramics and the like, and it is well known to the skilled in the art that the deformation for longer period of time under loading in the hot state is one of the most important properties as guidance of furnace designing.

Conventionally one example of the measurement of creep deformation rate is standardized in R 6—78 of PRE (European Community Standard). This measurement is a so-called push rod type, according to which the deformation of the specimen placed on a holder and a refractory disk provided within the electric furance is transferred by a displacement detecting tube, the deformation is measured for recordal by transfer dimension-measuring means connectable with a recorder, and the deformation is directly read from the curve after measurement when the creep deformation rate is calculated.

In this case the pressure is loaded by pressurizing means from a loading tube when the temperature of each of the interior and exterior of the specimen is measured by a thermocouple each therefor.

However, since this method is of differential type, sometimes temperature difference occurs between the specimen 2 and the deformation detecting tube 3 or the deformation detecting tube itself is softened and deformed due to high temperature thereby to cause errors. This necessitates a method of directing measuring the deformation without using a differential bar.

The inventors of this invention have made various studies to improve the above drawbacks of known types, and as a result they have been successful in developing a thermal deformation measuring system of ceramics and the like, which system can effect automatic and highly precise measuring.

The subject matter of the present invention resides in a thermal deformation measuring system for ceramics and the like, comprising means for supporting and heating a specimen of the material to be tested, means for illuminating opposed end portions of the specimen, detecting means associated with respective ones of the end portions, and telescopic lenses for forming images of the two end portions characterised by arrays to receive said images, the radiation characteristic curve of said illuminating means being different from that of the heated specimen, at least one infra-red ray removing filter for separating the image forming light from the light radiated from said heated specimen, said filter being located between said specimen and said lenses, and means for processing the signal from the photo-diode linear arrays to indicate the results of the measurements, said means including a computer and a digital plotter.

Embodiments of the invention will now be described more in detail by way of example and with reference to the accompanying drawings, in which

Fig. 1 is a schematic drawing showing the dispositional relation of an embodiment in which the deformation measuring system of the invention is applied to means for measuring the thermal expansion coefficient;

Fig. 2 is a graph showing the relationship between the temperature and the thermal expansion coefficient, based on the means for measuring the thermal expansion coefficient, which is shown in Fig. 1;

Fig. 3 is a schematic drawing showing another embodiment in which the means for measuring the thermal expansion coefficient, which is similar to that of Fig. 1, is used for small-sized specimen with prism;

Fig. 4 shows an oscilloscope wave configuration of the infrared ray sensed by solid scanning photo diode elements;

Fig. 5 shows an oscilloscope wave configuration in which the difference between the light zone and the dark zone has become clear by using filter;

Fig. 6 is a graph showing the relationship between the temperature and the thermal expansion coefficient, based on the apparatus for measuring the thermal expansion coefficient shown in Fig. 3;

Fig. 7 is a schematic drawing which shows a dispositional relation of an embodiment of applying the deformation measuring system of the invention to a creep measuring device;

Fig. 8 is a schematic side elevational drawing of the essential portions of Fig. 7;

Fig. 9 is a graph showing the relationship between the time and the deformation rate by means of the creep measuring device shown in Fig. 7;

Fig. 10 is a schematic drawing showing the dispositional relation of an embodiment of applying the deformation measuring system of the invention to a thermal elastic modulus measuring apparatus;

Fig. 11 is a sectional view of the essential portion of Fig. 10;

Fig. 12 is a graph showing the relationship between the temperature and the elastic modulus, based on the elastic modulus measuring apparatus; and

Figs. 13 and 14 are schematic drawings showing respective known means for measuring thermal expansion coefficient.

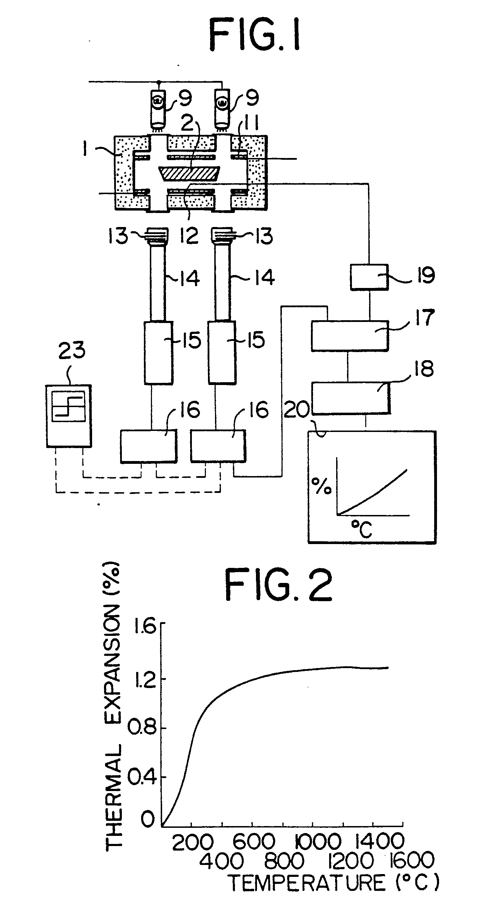

An embodiment in which the thermal deformation measuring system of ceramics and the like according to the invention is now described in detail by way of example in which solid state photo diode linear arrays are used at the detecting portion of the deformation measuring camera, with reference to Fig. 1.

As shown in Fig. 1, a specimen 2 is illuminated at both its ends by an illuminator 9 from the direction perpendicular to the axis of the specimen, and the dark zone intercepted from light by the specimen 2 and the light zone where light is directly reached are projected on an enlarged scale on a solid state photo diode linear array surface whereby the deformation is measured by the ratio of the light zone L to the dark zone D. In this case a single camera incorporates two solid state photo diode linear arrays, and it is also possible to use two pairs of independent deformation measuring cameras provided with telescopic lenses and filters.

In the case of using two deformation measuring cameras, an output is done with the digital output signal responsive to the deformation by adding the outputs of respective data processors 16. Said output and the digital signal output of a digital thermometer are inputted into a personal computer 18 through a personal computer interface 17 by means of a program prepared by general procedures, the storage is operated, and the relationship between the temperature and the thermal expansion coefficient is drawn in a curve by a digital plotter 20.

In the means of measuring the thermal expansion coefficient according to the invention, telescopic lenses 14 which read out a very little deformation of the specimen 2 need to be mounted away from the electric furnace to prevent a thermal affection, and therefore it is preferable to use lenses whose free working distance (the distance from the tip of lens to the article to be measured) is in the range of 200—700 mm (preferably 300—500 mm) and whose F number is in the range 5—8. If the working distance is shorter than that range, measurement is to be done by bringing the telescopic lenses 14 closely to the electric furnace 1 at high temperature thereby to cause a measuring error affected by temperature. On the other hand, if the F number is greater than that range it is difficult to obtain the required amount of light for measurement, while in the case of smaller F number than that range to the contrary the diameter of the lens becomes great so that in case two telescopic lenses 14 are arranged in parallel the distance between the centers of the lenses is too great to measure the specimen 2 except those of longer length.

For the telescopic lenses 14 used for this purpose it is necessary to make the magnification of the lens about 10 times to satisfy the measuring resolution of 1 μm besides the working distance and the brightness.

In the apparatus of measuring the thermal expansion coefficient according to the invention, as a countermeasure therefor there have been manufactured the telescopic lenses 14 to satisfy the conditions of composite lens ×10 times and the free working distance in the range 200—700 mm, allowing it solve the problem.

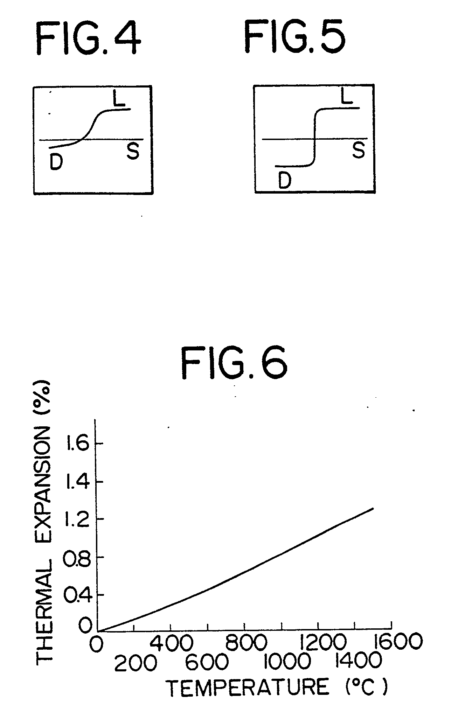

On the other hand, the specimen 2 within the electric furnace 1 emits infrared ray from itself when the temperature rises above 700°C. That is, the solid state photo diode linear arrays used for measuring the deformation display sensitivity to infrared ray, so that like the wave configuration of an oscilloscope 23 shown in Fig. 4 it is scarcely possible to produce a difference between the light zone L and the dark zone D in the solid state photo diode linear arrays surface and it is difficult to make measurement at the time of high temperature. To solve this problem a filter of removing the light in the infrared zone has been researched from various angles, and as a result there has been found a filter which completely removes the infrared rays emitted from the specimen, without reducing the insensity of light of illumination. Filters 13 are to remove the light of the wave length in the range more than 0.8 μm in the infrared zone and their light transmission factor must be more than 90% to obtain sufficient contrast and sufficient intensity of light for measurement. In this case a single filter need not to remove the wave length in the whole range of more than 0.8 μm, a combination of two or more filters will also be all right.

For the illuminator 9 is needed intensity of light to make sufficient contrast over the solid scanning photo diode element surface, ranging from low temperature to high temperature. As light source there is used incandescent lamp, xenon lamp, halogen lamp or laser beam, but from the view points of simple installation and easy handling it will be preferable to combine in use incandescent lamp with a voltage adjustor or halogen lamp with a reflector. In this case, the optical system may be preferably telecentric system. In any case, light is collected by condenser. Preferably, the light may be parallel rays with rectilinear propagation, the diameter of flux of light may be more than 10 mmφ in the surface of the specimen, and the luminous intensity may be more than 100,000 Candela/m² (100,000 nt).

Then the invention will be described with reference to measuring examples by means of the thermal expansion coefficient measuring apparatus of the invention.

Example 1

A silica brick was used as specimen. A specimen of 20 mm×15 mm high×80—85 mm long was set in an electric furnace 1 of the present invention shown in Fig. 1, there was employed telescopic lenses 14 in which the free working distance is 480 mm and the F number is 8 and glass filters 13 which remove the light of wave length more than 0.8 μm in the infrared zone, the temperature-rising rate was set to 4°C per minute, the data between room temperature and 1500°C were read every 5°C, and there was obtained a relationship between the temperature and the thermal expansion coefficient. The result is shown in Fig. 2.

In fine ceramics among similar ceramics the specimens are in many occasions of small size in general, and the thermal expansion coefficient must be measured often with small-size specimen.

For measuring the displacement of a small-sized specimen there is a method of measuring the deformations of both the ends of the specimen by using a single deformation measuring camera, but with such camera it is possible to measure the deformation of only such small specimen whose dimension is 2—5 mm. On the contrary, to enlarge the measuring area by using lens of low magnification, there takes place a problem that the reading accuracy is extrmely lowered.

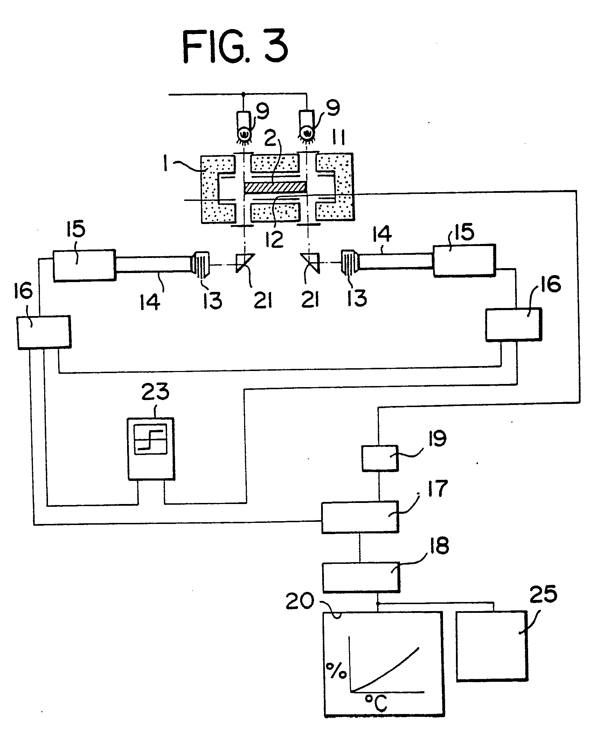

An embodiment of applying the thermal expansion coefficient measuring apparatus of the invention to a small-sized specimen of fine ceramics by using prism is now described in detail with reference to Fig. 3.

The deformation of the specimen 2 is measured in such a manner that both the ends of the specimen are illuminated by illuminators 9 from the single rectangular to the axis of the specimen, an image of the dark zone blocked from the light by the specimen 2 and an image of the light zone directly reached by the light are deflected 90° by prisms 21 arranged at the opposite side of the illuminators 9, said images are then magnified and projected by telescopic lenses 14 on the detection portions of deformation measuring cameras 15 being provided in parallel to the axis of the specimen 2, and the deformation is measured and calculated based on the ratio between the light zone L and the dark zone D.

The prisms 21 used in the present system deflect the light by 90°, their transmission factor of light is more than 95% and they should not make deformation to image. Ideally the material of the prism 21 is quartz glass, but from cost point of view hard glass will suffice if it is more than 95% in the transmission factor of light. As the detection portion of said deformation measuring camera 15 there can be used solid state photo diode linear array or photomultiplier tube.

Fig. 3 shows an example of the present invention having a pair of prisms and a pair of cameras. However, the prisms and the cameras can be varied in arrangement and it is possible also to provide a system for measuring thermal deformation rate with a single camera.

When the specimen 2 reaches higher than 700°C in measuring the thermal expansion coefficient, infrared rays are emitted from the specimen 2 itself. Said infrared rays are sensed by the solid state photo diode linear arrays being the detection portions of the cameras 15, and as shown in the oscilloscope wave shape in Fig. 4 the distinction of the light zone L from the dark zone D is no longer made on the photo diode linear array surfaces. In order not to be affected by the infrared rays it is necessary to co-use infrared ray removing filters 13. To remove infrared rays by using the filters 13 makes the measuring end faces distinct, and as shown in Fig. 5 there is obtained an oscilloscope wave shape of clear distinction between the light zone L and the dark zone D. Preferably the filters 13 are such ones that they remove the light of the wave length more than 0.8 μm in the infrared zone, which is discharged from the specimen 2, without reducing the quantity of the light from the illuminators, and their transmission factor of light is more than 90%. In this case, either of a single filter or a combination of two filters will do.

On the other hand, in the case of using photomultiplier tubes for the detection portions of said deformation measuring cameras 15 they are hardly sensitive to infrared ray, but the contours of the measuring end faces of said specimen 2 become unclear thereby to degrade the measuring accuracy, and therefore, it is preferable to filter. Referring to the mechanism of illuminators 9, it has the same conditions as in the aforementioned illuminators 9.

An example of measuring the thermal expansion coefficient of a small-sized specimen will now be described below.

Example 2

A recrystallized alumina specimen containing 99.5% alumina was used. A specimen of 5 mm wide×5 mm high×45 mm long wsa set in the electric furnace 1 of the present system shown in Fig. 3, there were used the deformation measuring cameras 15 which are incorporated with telescopic lenses 14 in which the free working distance is 460 mm and the F number is 8, with filters 13 which remove the light of wave length in the range more than 0.8 μm in the infrared zone, and with solid state photo diode linear arrays, the temperature-rising rate was set to 4°C per minute, the data between room temperature and 1500°C were read every 5°C, and there was obtained a relationship between the temperature and the thermal expansion coefficient. The result is shown in Fig. 6.

Thus it has been successful in developing a thermal expansion coefficient measuring apparatus with which it is possible to read the maximum accuracy up to 1 μm with a small-size specimen and to measure with high precision from low temperature to high temperature, by combining the deformation measuring cameras having the detection portions, the prisms, the telescopic lenses, the infrared ray removing filters and a known computer.

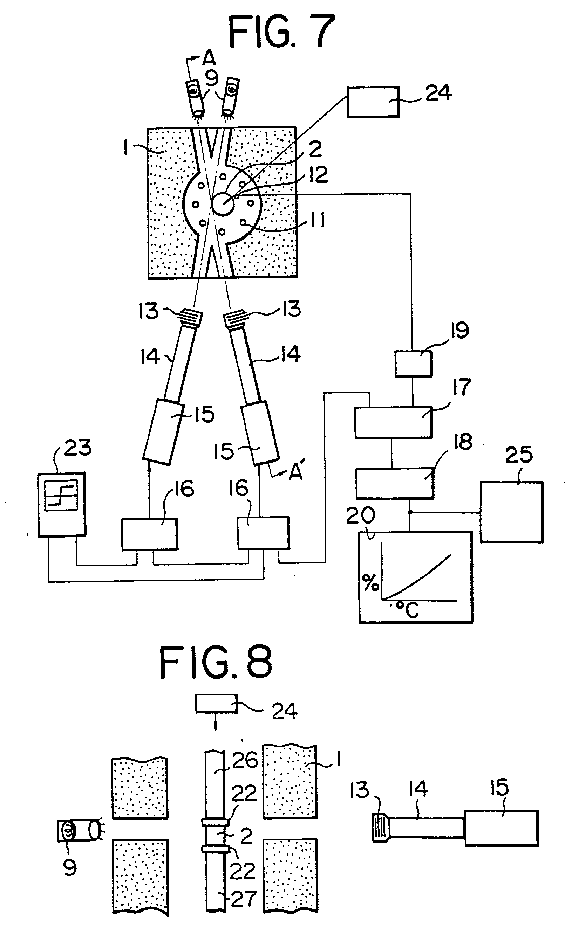

An embodiment of applying the thermal deformation measuring system of ceramics or the like of the present invention to a creep measuring device is then described in detail with reference to Figs. 7 and 8.

The deformation of the specimen 2 is measured in such a manner that as shown in Figs. 7 and 8, the specimen-facing sides of upper and lower refractory disks 22 of the specimen 2 are illuminated by the illuminators 9 from the direction rectangular to the axis of the specimen, the dark zone in which light has been blocked by said refractory disks 22 and the light zone to which light has been directly reached, are projected in a magnified state on the detection portions of the deformation measuring cameras by lenses, and the deformation is measured and calculated based on the ratio between the light zone L and the dark zone D.

In this case, the output of the data processors 16 is added thereby to be output by a digital output signal in response to the deformation. This output and the digital signal output of a digital thermometer 19 are inputted into a personal computer 18 through a personal computer interface 17 by a program prepared by general means, the memory is operated, and the relationship between the time and the creep deformation is described in a curve by means of a printer 25 and a digital plotter 20.

Practically, to increase the measuring precision, the upper face of the lower refractory disk 22 and the lower face of the upper refractory disk 22 are measured by using a pair of illuminators 9, a pair of telescopic lenses 14 and a pair of deformation measuring cameras 15, respectively. With smaller height of the specimen 2 it is incapable of arranging in each pair of the telescopic lenses 14 and the deformation measuring cameras 15, and therefore in such case it is possible to arrange in parallel each pair of the illuminators 9, the telescopic lenses 14 and the deformation measuring cameras 15 at angle diverted to the horizontal direction as shown in Fig. 7.

On the other hand, when the refractory disks 22 laid on the upper and lower portions of the specimen 2 in the electric furnace 1 reaches a temperature above 800°C, infrared rays are emitted from the disks themselves.

To solve this problem, there can be used filters 13 same as those mentioned in the example of said thermal expansion coefficient measuring apparatus, said filters removing the light of the wave length more than 0.8 μm in the infrared zone.

Also the mechanism of the illuminators 9 is as described above.

Thus the inventors of this invention have succeeded in developing a creep measuring device with which it is possible to read the maximum accuracy up to 1 μm and to measure with high precision from low temperature to high temperature by means of the structure of the present system.

An example of making measurement by the creep measuring device according to the invention will then be described below.

Example 3

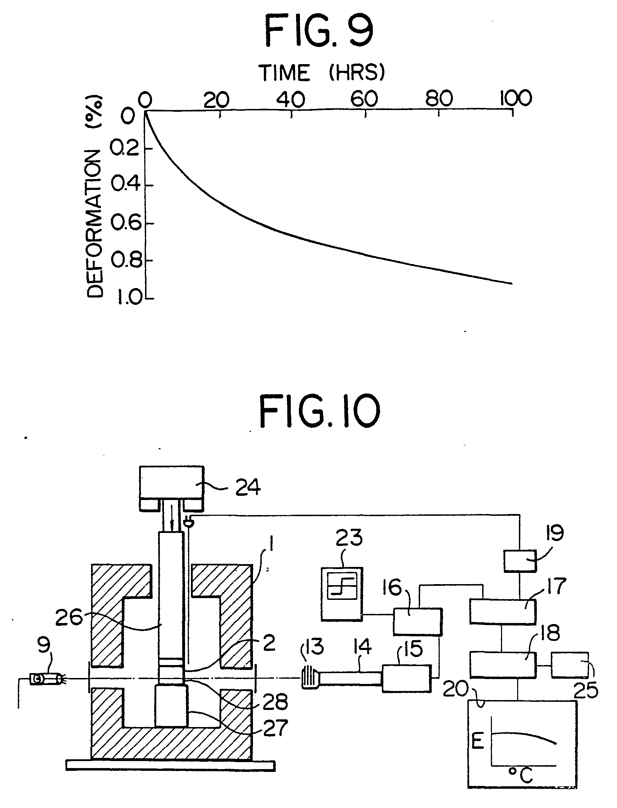

A fireclay brick was used as a specimen. A specimen of 30 mm in diameter×30 mm high was set in the electric furnace 1 of the present system shown in Fig. 7, the temperature within the furnace 1 was raised to 1300°C at the rate of 4°C per minute, then a load of $1.96×10^4$ Pa (2 kgf/cm²) was applied to the specimen by a loading means 24, and immediately thereafter the deformation of the specimen was measured and calculated every 10 minutes by the personal computer 18 by using each pair of the illuminator 9 using incandescent lamp, the telescopic lenses 14 wherein the free working distance is 480 mm while the F number is 8, and the glass filters 13 which remove the light of the wave length in the range more than 0.8 μm in the infrared zone, and the relationship between the time and the deformation was described by the plotter 20. The result is shown in Fig. 9.

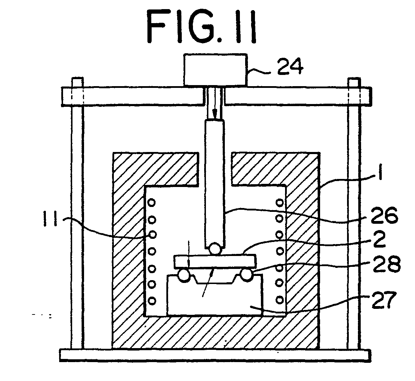

The thermal deformation measuring system of ceramics and the like according to the invention can be used even as a thermal elastic modulus measuring apparatus under the deflecting process, and one embodiment of the apparatus will be described minutely with reference to Figs. 10 and 11.

To explain the thermal elastic modulus measuring apparatus according to said embodiment, referring as example to one in which solid state photo diode linear array is used for the deformation measuring camera 15, the deflection displacement of the specimen 2 is measured in such a way that as shown in Figs. 10 and 11, the lower portion at the center of said specimen and the portion most close to the contact point of a support roll 28 with the specimen 2 are illuminated by a pair of illuminators 9 from the direction rectangular to the axis of the specimen, each point is measured by two deformation measuring cameras 15, the dark zone intercepted from light by the specimen 2 and the light zone which light is directly reached are projected in a magnified state on solid state photo diode linear array faces by telescopic lenses 14, and the deformation is measured and calculated based on the ratio between the light zone L and the dark zone D (said illuminator 9 and said deformation measuring camera 15 are shown each by a single unit only). In this case the difference of the output of each data processor 16 is calculated and it is output with a digital output signal in response to the deformation. This output and the digital signal output of a digital thermometer 19 are inputted into a personal computer 18 through a personal computer interface 17 by a program prepared by general means, the memory is operated when the result is printed in a printer 25, and simultaneously a curve of the relationship between the temperature and the elastic modulus is described in said printer 25.

Additionally, even in this thermal elastic modulus measuring apparatus, the mechanisms and various conditions of the telescopic lenses 14, the infrared ray removing filters 13 and the illuminators 9 are mostly same as those of said thermal expansion coefficient measuring apparatus. Further, the same references designate the same members.

An example of measuring the thermal elastic modulus according to the invention will be described.

Example 4

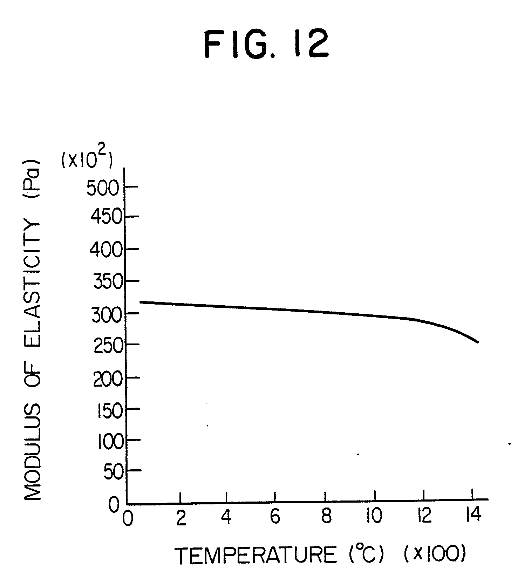

An alumina specimen of 10 mm wide×2.5 mm thick×60 mm long was set on an alumina-made supporting base 27 and supporting rolls 28 in an electric furnace 1 of the present system as shown in Fig. 10, and the specimen was applied with a load corresponding to 50—70% of the breaking strength of the specimen by an oil pressure loading means 24 provided outside the furnace, under 3-point bending system every 100°C up to 1500°C. At that time, the deformation immediately below the loaded point of the specimen 2 and the deformation most close to the contact point of the supporting roll 28 and the specimen 2 were measured being photographed in cameras incorporating solid state photo diode linear arrays therein by using telescopic lenses 14 wherein the free working distance is 460 mm and the F number is 8 and glass filters 13 which remove the light of the wave wength in the range more than 0.8 μm in the infrared zone, and the relationship between the temperature and the elastic modulus was described based on the following calculation equation. The result is shown in Fig. 12.

Calculation equation:

$$E = \frac{l^3 (P)}{4Wt^3y} × 9.80665 × 10^6 \ (Pa)$$

P: Load N
I: Distance (mm) between supporting rolls
W: Width (mm) of the specimen
t: thickness (mm) of the specimen
y: Displacement rate (mm) of the loading point

## Claims

1. A thermal deformation measuring system for ceramics and the like, comprising means (1) for supporting and heating a specimen (2) of the material to be tested, means (9) for illuminating opposed end portions of the specimen (2), detecting means (15) associated with respective ones of the end portions, and telescopic lenses (14) for forming images of the two end portions, characterised by arrays (15) to receive the said images, the radiation characteristic curve of said illuminating means (9) being different from that of the heated specimen (2), at least one infra-red ray removing filter (13) for separating the image forming light from the light radiated from said heated specimen (2), said filter (13) being located between said specimen (2) and said lenses (14), and means (16) for processing the signal from the photo-diode linear arrays (15) to indicate the results of the measurements, said means (16) including a computer (18) and a digital plotter (20).

2. A system as claimed in claim 1, characterised by means (21) for deflecting the image forming light beams away from one another in the region between the end portions and the lenses (14).

3. A system as claimed in claim 2, wherein said means (21) deflects the light beams through 90°.

4. A system as claimed in claim 2 or 3, wherein said means (21) are prisms.

5. A system as claimed in any preceding claim including two deformation measuring cameras, each incorporating one of said lenses (14) and arrays (15).

6. A system as claimed in any one of claims 1 to 4, wherein said lenses (14) and arrays (15) are located in a single deformation measuring camera.

7. A system as claimed in any preceding claim characterised in that the processing means (16) includes a data-processor (16).

8. A system as claimed in claim 7 characterised by a digital thermometer coupled to the computer (18) wherein the plotter (20) is operable to display the relationship between temperature and thermal expansion of the specimen (2).

9. A system as claimed in any preceding claim, characterised in that the filter (13) removes infra-red radiation of wave lengths greater than 0.8 µm.

10. A system as claimed in any preceding claim, characterised in that the free working distance of lenses (14) is in the range from 200 to 700 mm.

11. A system as claimed in any preceding claim characterised in that said means (1) includes lower and upper refractory discs (22).

## Patentansprüche

1. System zur Messung der thermischen Verformung von Keramik oder dergl., mit Mitteln (1) zum Aufnehmen und Erhitzen eines Prüflings (2) aus dem zu untersuchenden Material, Mitteln (9) zur Beleuchtung entgegengesetzter Endbereiche des Prüflings (2), Erfassungsmitteln (15), die jeweils einem der Endbereiche zugeordnet sind, und mit langbrennweitigen Objektiven (14), um Bilder der beiden Endbereiche zu erzeugen, gekennzeichnet durch Felder (15) zum Aufnehmen der Bilder, durch eine charakteristische Strahlungskurve der Mittel (9) zum Beleuchten, die sich von der des erhitzten Prüflings (2) unterscheidet, durch wenigstens ein infrarote Strahlung unterdrückendes Filter (13) zur Trennung des das Bild erzeugenden Lichtes von dem durch den erhitzten Prüflung (2) ausgestrahlten Licht, wobei das Filter (13) zwischen dem Prüfling (2) und den Objektiven (14) angeordnet ist, sowie durch Mittel (16) zum Verarbeiten des Signals der linearen Felder (15) aus Photodioden, um die Ergebnisse der Messungen anzuzeigen, wobei die Mittel (16) einen Computer (18) und einen Digital-Plotter (20) beinhalten.

2. System nach Anspruch 1, gekennzeichnet durch Mittel (21), um die die Bilder erzeugenden Lichtstrahlen in dem Bereich zwischen den Endbereichen und den Objektiven (14) von einander weg abzulenken.

3. System nach Anspruch 2, bei dem die Mittel (21) die Lichtstrahlen um 90° ablenken.

4. System nach einem der Ansprüche 2 oder 3, bei dem die Mittel (21) Prismen sind.

5. System nach einem der vorhergehenden Ansprüche, das zwei Kameras zur Messung der thermischen Verformung beinhaltet, von denen jede eines der Objektive (14) und eines der Felder (15) enthält.

6. System nach einem der Ansprüche 1 bis 4, bei dem die Objektive (14) und die Felder (15) in einer einzigen die thermische Verformung messenden Kamera enthalten sind.

7. System nach einem der vorhergehenden Ansprüche, bei dem die Mittel (16) zum Verarbeiten einen Daten-Prozessor (16) beinhalten.

8. System nach Anspruch 7, gekennzeichnet durch ein digitales Thermometer, das mit dem Computer (18) verbunden ist, bei dem der Plotter (20) dazu eingerichtet ist, die Beziehung zwischen der Temperatur und der thermischen Ausdehnung des Prüflings (2) darzustellen.

9. System nach einem der vorhergehenden Ansprüche, dadurch gekennzeichnet, daß das Filter (13) infrarote Strahlung mit einer Wellenlänge größer als 0.8 µm unterdrückt.

10. System nach einem der vorhergehenden Ansprüche, dadurch gekennzeichnet, daß der freie Arbeitsabstand der Objektive (14) im Bereich zwischen 200 und 700 mm liegt.

11. System nach einem der vorhergehenden Ansprüche, dadurch gekennzeichnet, daß die Mittel (1) untere und obere feuerfeste Scheiben (22) beinhalten.

**Revendications**

1. Système de mesure de déformation thermique destiné à des céramiques et analogues, comprenant un dispositif (1) de support et de chauffage d'un échantillon (2) du matériau à éprouver, un dispositif (9) d'éclairement de parties opposées d'extrémité de l'échantillon (2), un dispositif de détection (15) associé aux parties respectives d'extrémité, et des objects (14) de lunette destinés à former des images des deux parties d'extrémité, caractérisé par des ensembles (15) destinés à recevoir les images, la courbe caractéristique de rayonnement du dispositif d'éclairement (9) étant différente de celle l'échantillon chauffé (2), au moins un filtre (13) destiné à supprimer le rayonnement infrarouge, destiné à séparer la lumière formant l'image de la lumière émise par l'échantillon chauffé (2), le filtre (13) étant disposé entre l'échantillon (2) et les objectifs (14), et un dispositif (16) de traitement du signal des ensembles linéaires (15) de photodiodes destiné à indiquer les résultats des mesures, le dispositif (16) comprenant un ordinateur (18) et une table traçante numérique (20).

2. Système selon la revendication 1, caractérisé par un dispositif (21) destiné à écarter les faisceaux lumineux de formation d'image l'un de l'autre dans la région comprise entre les parties d'extrémité et les objects (14).

3. Système selon la revendication 2, dans lequel ledit dispositif (21) écarte les faisceaux lumineux d'un angle de 90°.

4. Système selon la revendication 2 ou 3, dans lequel ledit dispositif (21) est formé de prismes.

5. Système selon l'une quelconque des revendications précédentes, comprenant deux caméras de mesure de déformation comportant chacune l'un des objectifs (14) et des ensembles (15).

6. Système selon l'une quelconque des revendications 1 à 4, dans lequel les objectifs (14) et les ensembles (15) sont disposés dans une même caméra de mesure de déformation.

7. Système selon l'une quelconque des revendications précédentes, caractérisé en ce que le dispositif de traitement (16) comporte un processeur de données (16).

8. Système selon la revendication 7, caractérisé par un thermomètre numérique couplé à l'ordinateur (18), et dans lequel la table traçante (20) et destinée à présenter la relation entre la température et la dilatation thermique de l'échantillon (2).

9. Système selon l'une quelconque des revendications précédentes, caractérisé en ce que le filtre (13) supprime le rayonnement infrarouge à des longueurs d'onde supérieures à 0.8 µm1

10. Système selon l'une quelconque des revendications précédentes, caractérisé en ce que la distance libre de travail des objects (14) est comprise entre 200 et 700 mm.

11. Système selon l'une quelconque des revendications précédentes, caractérisé en ce que le dispositif (1) comporte des disques réfractaires inférieur et supérieur (22).

# FIG.1

# FIG. 2

# FIG. 3

# FIG.4    FIG.5

# FIG.6

# FIG. 7

# FIG. 8

# FIG. 9

# FIG. 10

# FIG. 11

# FIG. 12

# FIG. 13

# FIG. 14

8